# FASCICULE DE BREVET EUROPEEN

(11) **EP 1 160 043 B1**
(45) Date de publication et mention de la délivrance du brevet: **09.06.2004**
(21) Numéro de dépôt: 00500107.8
(22) Date de dépôt: 30.05.2000
(51) Int. Cl.: B23K 9/028, B23K 37/053

(54) **Procédé et tête pour l'union de pièces de tubes et de coudes en acier inoxydable**
Verfahren und Kopf zum Verbinden von Rohren und Rohrbogen aus rostfreiem Stahl
Process and welding head for joining tubes and bends both of stainless steel

(43) Date de publication de la demande: 05.12.2001
(73) Titulaire: FRIMETAL, S.A., 28031 Madrid (ES)
(72) Inventeur: Martinez Perez-Sole, Ramon, 28031 Madrid (ES)
(74) Mandataire: Urizar Anasagasti, Jesus Maria

(56) Documents cités:
- US-A- 4 076 167
- US-A- 4 161 273
- US-A- 4 521 669
- US-A- 5 310 982

## Description

La présente invention concerne un procédé utilisé pour préparer des pièces de tubes en acier inoxydable avant d'être soudées au moyen d'un système "TIG" en atmosphère inerte à base de gaz argon, ou tout autre gas empêchant l'entrée de l'oxygène de l'air pour éviter la nitruration du matériel ou que celui-ci soit brûlé et obtenir ainsi une soudure propre; libre d'impuretés et de pores, où l'étanchéité puisse être assurée.

Lorsqu'il s'agit d'unir des tubes droits, cette soudure peut être faite automatiquement avec un équipement spécial ayant une tête standard à mouvement orbital autour du tube, mais pour celà il faut un alignement et un centrage parfait entre les deux portions de tube à unir, ce qui peut s'obtenir facilement lorsque les deux sont droites, ce qui n'est pas le cas lorsque les tubes sont des fourches comme celles introduites dans les ailettes des échangeurs thermiques où pour fermer le circuit il faut souder des coudes du même type de tube et du même diamètre que les tubes de ligne ou de fourche, et où en outre, il n'existe pas d'espace vital pour aligner les tubes et pouvoir ainsi effectuer la soudure par le système précité à tête orbital standard, condition indispensable pour obtenir une étanchéité totale dans le circuit.

Jusqu'à présent ce type de circuit est effectué avec des tubes en cuivre, qui sont parfaitement soudés par des moyens conventionnels, en utilisant en tant que fluides les gaz de refroidissement connus comme le CFC et d'autres semblables présentant de graves problèmes vis-à-vis de la couche d'ozone. En tendant à résoudre ce problème, on utilise à nouveau le gaz ammoniac (NH3) comme gas de refroidissement, mais il présente l'inconvénient d'attaquer le cuivre, ce qui fait qu'il est nécessaire de fabriquer les échangeurs avec des tubes en acier inoxydable, présentant les problèmes de soudure mentionnés ci-dessus, et où il faut en outre, faire très attention au fait qu'il n'y ait pas de fuites du gaz ammoniac (NH3) par les pores, car en tout cas, les fuites de ce produit présentent entre autres inconvénients, sa toxicité à l'état gazeux.

Ce problème a été résolu par la présente invention en effectuant une expansion à l'extrémité d'un des tubes à unir, dans ce cas, dans le tube provenant des fourches à ailettes. Cette expansion a un diamètre intérieur égal au diamètre extérieur du tube d'origine, de manière qu'à son intérieur soit introduite une portion droite du coude fermant le circuit qui reste aligné et concentrique, pour qu'une tête automatique spéciale puisse effectuer la soudure orbitale autour de l'union sans aucun type de problème. Cette solution permet ainsi d'assurer complètement l'étanchéité du circuit. Il est aussi remarquable que le diamètre intérieur dans la zone de soudure et d'union, ne rétrecit pas car les tubes constitutifs du circuit présentent les mêmes dimensions, de cette manière on évite les possibles pertes de charge dans le circuit.

Pour la réalisation de cette soudure on a projetté une tête automatique spéciale présentant un bâti ayant une configuration sous forme de "L", dans une des ses branches on incorpore une butée qui retient la pièce coudée à unir, tandis que dans son autre branche, on dispose des mors retenant la portion droite, la zone de soudure étant dans un plan intermédiaire, où est située une couronne dentée tournante incorporant le porte-électrode de tungstène, ainsi que les bouts d'un conduit de refroidissement par eau et la sortie d'un fluide de gaz inerte, normalement de l'argon, nécessaire pour que la soudure soit réalisée sans l'entré d'oxygène de l'air environnant et par conséquent qu'elle soit correcte et libre de pores à l'intérieur du matériel.

Cette couronne tournante est supportée sur le bâti au moyen de guides circulaires permettant sa rotation lors d'un tour complet orbital autour de la zone à unir. Aussi bien les guides que ladite couronne présentent une ouverture ou évidement latéral permettant préalablement l'introduction à son intérieur des pièces à unir pour que ledit mouvement orbital soit réalisé autour de celles-ci. La couronnne tournante est entraînée dans son mouvement de rotation par des pignons dentés placés en position tangentielle et déplacés par la transmission réalisée à partir d'un moteur situé sur la partie supérieure. Ce mecanisme est commandé électroniquement par un équipement central qui envoie à la tête décrite le courant électrique, aussi bien pour le moteur, que pour l'électrode de soudure, ledit courant étant à ce point un courant d'arc pulsant.

Celles-ci et d'autres caractéristiques de la présente invention seront mieux comprises à l'aide de la suivante description réalisée sur la base d'un exemple pratique de réalisation; cette description est effectuée sur la base des dessins des plans ci-joint, où:

Les figures 1, 2 et 3 montrent respectivement une pièce coudée (1) et une portion de tube (2), avant d'effectuer l'union, au moment antérieur à la soudure et une fois les élements soudés.

La figure 4 montre dans une vue en projection générale et sectionnée diamétralement, une tête de soudure spéciale placée en position pour effectuer l'union entre deux pièces (1), (2) et (3).

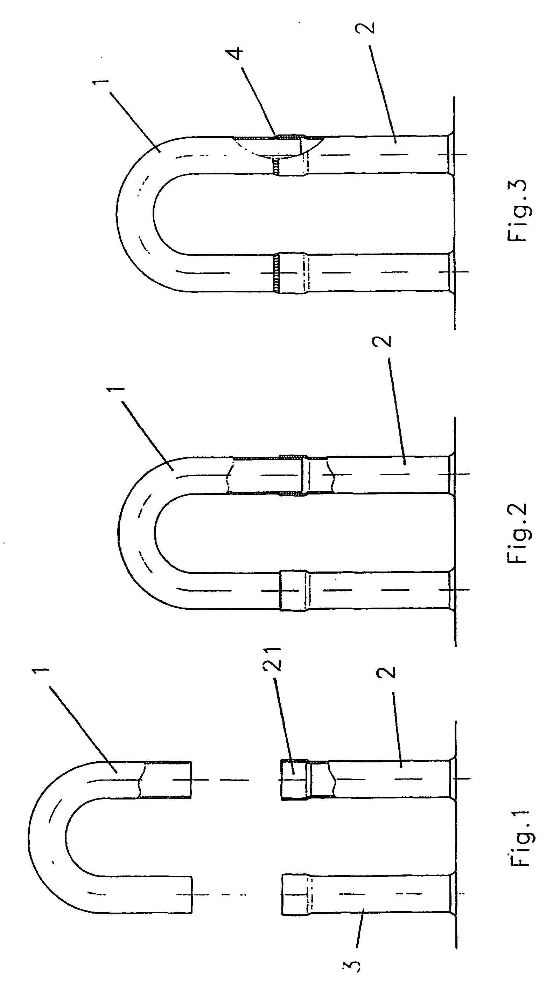

Il s'agit d'unir dans ce cas-ci un coude (1), qui par exemple ferme le circuit d'un échangeur thermique et les portions de tubes (2) et (3) provenant par exemple des fourches à ailettes dudit échangeur; pour celà on effectue dans les bouts (21) des pièces (2) et (3) une expansion ayant un diamètre intérieur égal au diamètre extérieur des tubes respectifs conformant la pièce. On introduit parallèlement à l'intérieur des expansions (21) les extrémités droites du coude (1) qui sont parfaitement guidées et centrés, tandis qu'à l'intérieur il y a une continuité dans la conduite car aussi bien le coude (1) que les pièces (2) et (3) ont un diamètre intérieur égal, (voir figure 2). A la suite, on effectue la soudure par un système "TIG" en atmosphère inerte avec une tête orbitale établissant une union (4) dans la zone de confrontation des expansions (11) et (21), dont le fondant provient du même matériaux les tubes, et sans aucun apport extérieur déposé sur l'union même des pièces (1), (2) et (3) en assurant ainsi par fusion des pièces, une étanchéite totale du circuit.

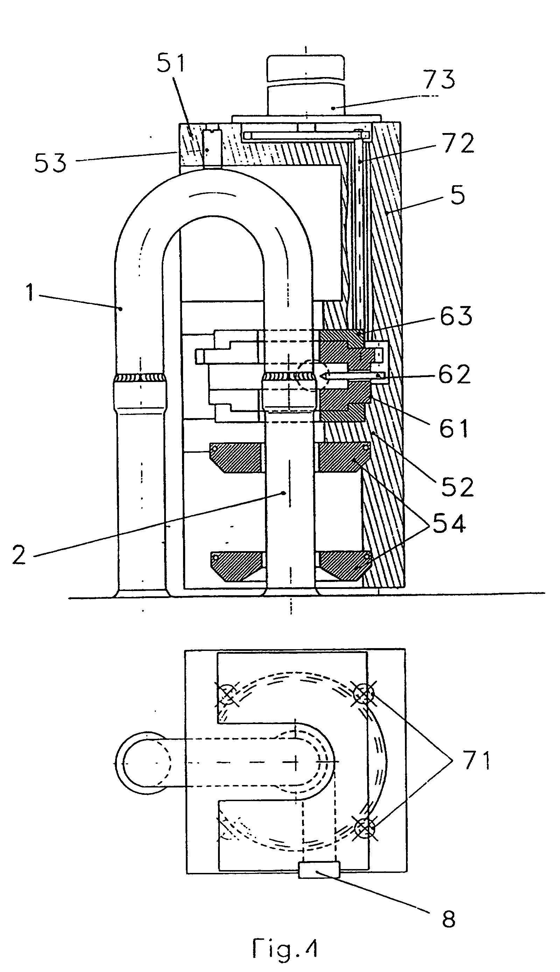

Pour la réalisation de ce procédé d'union, on prévoit une tête spéciale, présentée plus en détail dans la figure 4, qui comprend un bâti (5) ayant une configuration générale sous forme de "L", sur une de ses branches (51) est placée une butée (53) qui associée à des mors (54) présents sur l'autre branche (52), permettent l'immobilisation des deux pièces à unir (1) et (2), une fois réalisées les opérations d'évasement et l'introduction de la section de tube (4) à l'intérieur comme il a été décrit ci-deessus. La butée (53) est, de préférence, une vis micrométrique ou un élément présentant un ressort exerçant à son extrémité une pression contre la pièce (1) sur un point, comme le centre de son arc ou légèrement sur un plan extérieur; par ailleurs les mors (54) sont du type à ressort mecanique, ou bien ayant une came actionnée par un petit cylindre pneumatique qui saisit fermement par deux points la portion droite (2) pour faciliter son immobilisation par rapport au bâti et par rapport à la pièce (1) montée sur elle.

Au centre dudit bâti (5), c'est-à-dire où coïncide la zone (4) d'union entre les pièces (1) et (2), ou bien où est effectuée la soudure, est disposée une couronne dentée (61), incorporant le porte-électrode de tungstène (62) correspondant, ainsi que des conduits, à travers l'un desquels circule de l'eau de refroidissement pour la zone de la soudure et par l'autre du gas inerte, de préférence de l'argon, nécessaire pour la réalisation sans oxyène de l'air de cette opération d'union et par conséquent avec des garanties totales d'étanchéité et de maintenance.

Cette couronne dentée (61) réalise un mouvèment orbital de rotation autour de la zone (4) d'union, et elle est montée à cet effet sur des guides circulaires (63) incorporés audit bâti (5), et qui présentent, tout comme la couronne dentée (61), des ouvertures ou évidements latéraux permettant l'introduction des pièces (1) et (2) à l'intérieur de ladite couronne dentée et desdits guides circulaires pour pouvoir, une fois immobilisées adéquatement, réaliser le mouvement orbital en même temps que la réalisation de la soudure de toute l'union.

Pour le déplacement de la couronne dentée (61) on prévoit des pignons (71), placés tangentiellement, lesquels à travers la transmission (72) recoivent l'actionnement d'un moteur (73), situé de préférence sur la branche (51) du bâti. Ce mécanisme est commandé électroniquement par l'équipement central envoyant à la tête décrite le courant électrique, aussi bien pour le fonctionnement du moteur (73), que pour l'électrode de fusion de tungstène (72).

L'équipement fournisseur de courant électrique à la tête est commandé électroniquement et contrôlé par un microprocesseur permettant une grande précision, non seulement du courant pulsant (TIG) mais aussi du l'alimentation en gaz inerte et un chronométrage automatique de la vitesse de mouvement de rotation du porte-électrode de tungstène.

Un viseur (8) présent sur la tête permet d'observer avant le début de la soudure le positionnement exact de l'électrode sur la ligne où il faut effectuer la soudure pour un fusion parfaite des deux pièces à souder.

## Revendications

1. Procédé pour union de pièces de tubes et de coudes en acier inoxydable, qui sont soudées en utilisant le système "TIG" à arc pulsant et atmosphère inerte, à base de gaz argon pour éviter la nitruration du matériau et obtenir une soudure propre, libre d'impuretés et de pores, la soudure étant effectuée avec un équipement spécial disposant d'une tête réalisant une rotation orbitale et ayant besoin d'un alignement et d'un centrage parfait entre les pièces à unir, dans lequel on réalise premièrement une expansion (21) aux extrémités des pièces de tubes (2) et (3) à unir, avec un diamètre intérieur égal à celui du diamètre extérieur du tube d'origine, les extrémités droites du coude (1) étant introduites à l'intérieur desdites expansions, une soudure orbitale ayant alors lieu, autour de l'union, une fois couplées les pièces en regard.

2. Tête pour union de pièces de tubes et coudes en acier inoxydable, selon la revendication antérieure, **caractérisée en ce qu'**elle comprend: a) un bâti (5) ayant une configuration sous forme de "L", dont l'une des branches (51) incorpore une butée (53) retenant la pièce coudée (1), tandis que l'autre branche (52) présente des mors (54) pour retenir la pièce droite (2), la zone de soudure étant située entre les deux moyens de serrage, b) des moyens de soudure (6) situés sur ledit bâti (5), en regard de la zone d'union (4), formés par une couronne dentée (61), incorporant les porte-électrodes de tungstène correspondants (62) et un conduit de refroidissement et un autre d'alimentation en gaz inerte, nécessaire pour la réalisation des soudures sans oxygène, ladite couronne étant montée sur des guides circulaires (63), situés sur le bâti (5),tous deux ayant un évidement latéral suffisant pour permettre l'accès à l'intérieur des pièces à souder; c) des moyens d'actionnement de ladite couronne (61) avec un mouvement de rotation planétaire autour de la zone d'union (4), formés par des pignons (71) couplés sur la couronne dentée (61) et ils sont déplacés par la transmission (72) réalisée à partir du moteur (73), situés sur la branche opposée (51) du bâti; et d) un viseur (8) permettant l'observation, avant le début du cycle de soudure, du positionnement exact de l'électrode.

## Patentansprüche

1. Verfahren für das Verbinden von Rohrteilen und Bögen aus rostfreiem Stahl, die mit dem "TIG"-System geschweißt werden, mit Impulslichtbogen und Inertgasatmosphäre auf der Grundlage von Argon und anderen Gasen, die den Eintritt von Luftsauerstoff verhindern, um eine Nitrierung des Materials zu verhindern und eine saubere Schweißung ohne Unreinheiten und Poren zu erreichen, wobei die Schweißung mit einem Spezialgerät durchgeführt wird, das mit einem Kopfstück ausgestattet ist, das eine umlaufende Drehung ausführt und eine einwandfreie Ausrichtung und Zentrierung zwischen den zu verbindenden Teilen erfordert, bei dem zunächst eine Aufdehnung (21) an den Enden der zu verbindenden Rohrteilen (2) und (3) vorgenommen wird, mit einem Innendurchmesser, der dem Außendurchmesser des Originalrohrs entspricht, wobei im Inneren der genannten Aufdehnungen die geraden Enden des Bogens (1) eingeführt werden, wonach eine umlaufende Schweißung vorgenommen wird, um die Verbindung, nachdem die gegenüberliegenden Teile miteinander verbunden wurden.

2. Kopfstück für das Verbinden von Rohrteilen und Bögen aus rostfreiem Stahl nach dem vorhergehenden Anspruch, **dadurch gekennzeichnet, dass** es folgendes umfasst: a) einen L-förmigen Rahmen (5), von dem ein Schenkel (51) einen Anschlag (53) aufweist, der das gebogene Teil (1) festhält, während der andere Schenkel (52) Greifbacken (54) aufweist, um das gerade Teil (2) festzuhalten, wobei der Schweißbereich zwischen den beiden Befestigungsmitteln zu liegen kommt; b) Schweißmittel (6), die am genannten Rahmen (5) angeordnet sind, gegenüber dem Verbindungsbereich (4), bestehend aus einem Zahnkranz (61), der die entsprechenden Wolframelektrodenhalter (62) und eine Kühlleitung, sowie eine weitere Leitung für die Zufuhr von Inertgas, das notwendig ist, um die Schweißungen ohne Sauerstoff durchzuführen aufweist, wobei dieser Kranz auf kreisförmigen Führungen (63) montiert wird, die auf dem Rahmen (5) angeordnet sind, wobei beide mit einer seitlichen Aussparung ausgestattet sind, die ausreichend groß ist, um den Zugang zum Inneren der zu verschweißenden Teile zu ermöglichen; c) Antriebsmittel für den genannten Kranz (61) bei einer planetarischen Drehbewegung um den Verbindungsbereich (4), die aus Zahntrieben (71) bestehen, die mit dem Zahnkranz (61) verzahnen und durch die Übertragung (72) bewegt werden, die von einem Motor (73) aus durchgeführt wird, der auf dem gegenüberliegenden Schenkel (51) des Rahmens angeordnet ist; und d) ein Visier (8), das es ermöglicht, vor Beginn des Schweißzyklus die genaue Positionierung der Elektrode zu prüfen.

## Claims

1. A method for joining pieces of stainless steel pipes and elbows, which are welded together using the TIG system with a pulsating arc and inert atmosphere, based on argon gas or other gases preventing oxygen from the air from entering in order to prevent the nitridation of the material and to achieve a clean weld, free of impurities and pores, the welding being carried out with special equipment provided with a head carrying out an orbital rotation and requiring perfect alignment and centering between the pieces to be joined, wherein an extension (21) is first carried out on the ends of the pieces of pipe (2) and (3) to be joined, with an inner diameter equal to the outer diameter of the original pipe, the straight ends of the elbow (1) being introduced inside said extensions, an orbital welding then being carried out around the joint once the facing pieces are coupled.

2. A head for joining pieces of stainless steel pipes and elbows according to the previous claim, **characterized in that** it comprises: a) an L-shaped frame (5), one of the wings (51) of which incorporates a stop (53) fixing the elbow piece (1), whereas the other wing (52) has clamps (54) for securing the straight piece (2), the welding area being located between both fixing means; b) welding means (6) located on said frame (5), facing the joint area (4), formed by a ring gear (61), incorporating the corresponding tungsten electrode holders (62) and a cooling conduit and another conduit for supplying inert gas, necessary for carrying out the welding without oxygen, said ring being assembled in circular guides (63) located on the frame (5), both provided with a side indentation sufficient for allowing access to the inside of the pieces to be welded; c) means for operating said ring (61) in a planetary rotational motion about the joint area (4), formed by pinions (71) which couple to the ring gear (61) and are moved by the transmission (72) carried out from a motor (73) placed on the opposite wing (51) of the frame; and d) a viewing device (8) which allows observing the exact placement of the electrode prior to the commencement of the welding cycle.
